# EUROPÄISCHE PATENTSCHRIFT

(11) **EP 1 826 476 B1**
(45) Veröffentlichungstag und Bekanntmachung des Hinweises auf die Patenterteilung: **31.12.2008**
(21) Anmeldenummer: 07001437.8
(22) Anmeldetag: 24.01.2007
(51) Int. Cl.: F21S 8/10, F21V 14/08

(54) **Beleuchtungsvorrichtung für ein Fahrzeug**
Illumination device for a vehicle
Dispositif d'éclairage pour un véhicule

(30) Priorität: 22.02.2006 DE 102006008188
(43) Veröffentlichungstag der Anmeldung: 29.08.2007
(73) Patentinhaber: AUDI AG, 85045 Ingolstadt (DE)
(72) Erfinder: Grünleitner, Holger, Dr., 85051 Ingolstadt (DE); Taner, Anil, 85057 Ingolstadt (DE)
(74) Vertreter: Thielmann, Frank

(56) Entgegenhaltungen:
- EP-A1- 1 069 373
- DE-A1- 19 642 467
- US-A- 3 341 700
- US-A- 5 645 338

## Beschreibung

Die Erfindung betrifft eine Beleuchtungsvorrichtung zur Umgebungsausleuchtung eines Fahrzeugs mit zumindest einer Lichtquelle deren optische Achse in Richtung einer Abbildungsoptik orientiert ist, wobei zwischen der Lichtquelle und der Abbildungsoptik eine Blendenanordnung mit zumindest zwei Blenden angeordnet ist, wobei jede Blende separat bewegbar ist.

In Fahrzeugen sind Frontscheinwerfer als Beleuchtungsvorrichtungen zur Umgebungsausleuchtung eines vor dem Fahrzeug befindlichen Bereichs angeordnet. Derartige Frontscheinwerfer können in modernen Fahrzeugen eine Mehrzahl an Lichtquellen in Form von LEDs (Light Emitting Diodes) aufweisen.

Darüber hinaus sind auch Frontscheinwerfer bekannt, welche als Bi-Xenon-Scheinwerfer ausgebildet sind. Hierbei ist eine Gasentladungslampe, insbesondere eine Xenon-Lampe, in dem Scheinwerfer angeordnet, welche sowohl zur Erzeugung des Abblendlichts als auch zur Erzeugung des Fernlichts bereitgestellt ist. Bei derartigen Bi-Xenon-Scheinwerfern befindet sich zwischen der Lichtquelle und einer Abbildungsoptik, insbesondere in dem Scheinwerferglas, eine Metallblende, die für die Hell-Dunkel-Grenze des Abblendlichts verantwortlich ist. Diese einzige Blende wird aus dem Strahlengang der Lichtquelle geschwenkt, wenn das Fernlicht eingeschaltet wird und das gesamte verfügbare Licht aus dem Scheinwerfer austreten soll.

Darüber hinaus sind bei modernen Fahrzeugen auch Systeme angeordnet, welche mit Hilfe eines Erfassungssystems, wie beispielsweise einer Kamera, andere Verkehrsteilnehmer bei Nacht anhand deren Scheinwerferlichts in der Dunkelheit erkennen und die Ausleuchtung des Bereichs vor dem Fahrzeug durch das Fernlicht derart anpassen, dass die erkannten Verkehrsteilnehmer durch das Fernlicht des eigenen Fahrzeugs nicht geblendet werden. Dies kann dadurch erreicht werden, dass einzelne Bereiche eines feststehenden Leuchtbereichs des Fernlichts ausgeblendet werden, in dem sich andere Verkehrsteilnehmer befinden. Die LED-Arrays leuchten dabei voneinander abgegrenzte Bereiche des Fahrzeugvorfelds aus und werden situationsabhängig derart angesteuert, dass sie genau dann abgeschaltet, gedimmt oder durch eine oder mehrere Blenden abgedeckt werden, wenn ein anderer Verkehrsteilnehmer gerade in diesem, von dem LED ausgeleuchteten Teilbereich des gesamten Leuchtbereichs des Frontscheinwerfers sich befindet. Die Blenden sind matrixförmig vor der Lichtquelle angeordnet.

Des Weiteren ist aus der DE 100 57 367 A1 eine Steuerungsvorrichtung zur Einstellung der Lichtverteilung bei einem Fahrzeug bekannt. Die Leuchtmittel können bezüglich ihrer Abstrahlcharakteristik verändert werden, wobei ein Aktor von einer Steuereinrichtung beaufschlagt wird, welche die Abstrahlcharakteristik in Abhängigkeit von Sensorinformationen verändert. Die verkehrsabhängige Änderung der Lichtverteilung erfolgt dabei in Abhängigkeit von Informationen eines GPS-Systems (Global Positioning System) und weiteren Fahrzeugsensoren, welche zur Detektion des Lenkwinkels, der Fahrzeuggeschwindigkeit, etc., ausgebildet sind. Der Scheinwerfer des Fahrzeugs umfasst neben dem Aktor ein Reflektorteil, welches in Abstrahlrichtung der Lichtquelle hinter der Lichtquelle positioniert ist, wobei das Reflektorteil durch den Aktor verstellbar ist, wodurch sich der Lichtstrahl der Lichtquelle in seiner Form, seiner Richtung und seiner Lichtverteilung beeinflussen lässt.

Darüber hinaus ist aus der DE 43 18 315 C2 eine verstellbare Blendenanordnung für einen Fahrzeugscheinwerfer bekannt. Der Scheinwerfer umfasst eine Lichtquelle, welche in Abstrahlrichtung vor einem Reflektor angeordnet ist. Darüber hinaus umfasst der Scheinwerfer auch eine Abbildungsoptik, insbesondere ein Scheinwerferglas, welches in Abstrahlrichtung der Lichtquelle vor der Lichtquelle positioniert ist. Zwischen der Lichtquelle und der Abbildungsoptik ist eine Blendenanordnung angeordnet. Die Blendenanordnung ist zur Umsetzung verschiedener Abblendlichtverteilungen bewegbar und weist eine Mehrzahl an separat bewegbaren Blenden auf. Die Bewegung der Blenden kann jedoch nur derart erfolgen, dass vordefinierte Leuchtverteilungen umgesetzt werden können. Die Blende weist zwei separate Blendenkörper auf, welche relativ zueinander bewegbar sind. Jeder Blendenkörper umfasst ein Drehelement, an dem Lamellenkörper angeordnet sind. Das Drehelement ist zylinderförmig ausgebildet und die Lamellenkörper münden an die Umfangsfläche des Drehelements. Die Lamellenkörper sind somit mit ihren Randbereichen an dem Drehelement angeordnet.

Die Lamellenkörper erstrecken sich in Längsrichtung zumindest in einer Richtung über die Länge des Drehelements hinaus. Die beiden Drehkörper werden derart zusammengesetzt, dass ihre Drehachsen der Drehelemente identisch sind und in Richtung der Drehachse betrachtet die Lamellenkörper überlappend angeordnet sind. Im zusammengefügten Zustand der Blendenkörper wird somit eine verzahnte Anordnung der Lamellenkörper zwingend ausgebildet, um das Funktionsprinzip der vordefinierten Leuchtverteilungseinstellung durch Drehung der jeweiligen Blendenkörper und somit auch der Lamellenkörper einstellen zu können.

Die bekannte verstellbare Blendenanordnung ist in ihrer Funktionalität erheblich eingeschränkt, wodurch auch die Abblendlichtverteilung im Hinblick auf ein Vermeiden eines Blendens von anderen Verkehrsteilnehmern nur unzureichend erfüllt werden kann.

Die Druckschrift DE 196 42 467 A1 offenbart eine Scheinwerferanlage für Fahrzeuge zur Aussendung eines veränderlichen Lichtbündels. Die Scheinwerferanlage umfasst eine Scheinwerfereinheit, die nach dem Projektionsprinzip aufgebaut ist. Dabei umfasst die Scheinwerfereinheit einen Reflektor, eine in den Reflektor eingesetzte Lichtquelle, eine Linse und eine zwischen der Linse und dem Reflektor unterhalb dessen optischer Achse angeordnete Blende. Die Blende kann in vertikaler Richtung verschiebbar sein, um die Lage einer Hell/Dunkelgrenze des ausgesandten Lichtbündels zu verändern.

Die Druckschrift EP 1 069 373 A1 offenbart eine Beleuchtungseinrichtung, die zwei zueinander beabstandet angeordnete Blenden aufweist. Dabei ist eine erste Blende derart ausgebildet, dass sie selektiv in zwei unterschiedliche Positionen gebracht werden kann.

Die Druckschrift US 5,645,338 offenbart eine Beleuchtungseinrichtung für ein Fahrzeug, mit welcher eine Hell-Dunkel-Grenze des Abblendlichts zur Vermeidung oder Reduzierung von Blendung verschiebbar ist.

Die Druckschrift 3,341,700 offenbart eine Beleuchtungseinrichtung für ein Fahrzeug. Die Beleuchtungseinrichtung umfasst dabei zwei Scheinwerfer, welche jeweils eine Lichtquelle, einen Reflektor, eine Linse und eine zwischen dem Reflektor und der Linse angeordnete Blende aufweist. Dabei weist die jeweils eine Blende lichtdurchlässige und lichtundurchlässige Bereiche auf, wobei der Übergang zwischen den Bereichen im Hinblick auf die Transmissionseigenschaften stetig verläuft.

Daher ist es Aufgabe der vorliegenden Erfindung, eine Beleuchtungsvorrichtung zu schaffen, bei der die Funktionalität erhöht ist und eine Umgebungsausleuchtung verbessert werden kann, wobei gerade die Leuchtweitenregulierung des Fernlichts zur Blendenvermeidung von Verkehrsteilnehmern verbessert wird.

Diese Aufgabe wird durch eine Beleuchtungsvorrichtung, welche die Merkmale nach Patentanspruch 1 aufweist, gelöst.

Eine lösungsgemäße Beleuchtungsvorrichtung ist zur Umgebungsausleuchtung eines Fahrzeugs ausgebildet und umfasst zumindest eine Lichtquelle, deren optische Achse in Richtung einer Abbildungsoptik orientiert ist. Zwischen der Lichtquelle und der Abbildungsoptik ist eine Blendenanordnung mit zumindest zwei Blenden angeordnet, wobei jede Blende separat bewegbar ist. Jede der Blenden ist somit unabhängig von der anderen Blende stellungsveränderlich positionierbar. Zumindest eine der Blenden, bevorzugt alle Blenden, der Blendenanordnung ist zumindest zwischen der Lichtquelle und der Abbildungsoptik positionsveränderlich verschiebbar. Durch diese Ausgestaltung der Beleuchtungsvorrichtung kann eine besonders präzise Ausleuchtung der Umgebung erreicht werden. Des Weiteren ist dadurch gewährleistet, dass eine sehr exakte Ausgestaltung im Hinblick auf ein Austreten von Lichtstrahlen oder ein Verhindern dieses Austritts aus der Beleuchtungsvorrichtung ermöglicht werden kann. Die separate Bewegbarkeit und die Positionierung der Blenden zueinander ermöglicht auch eine besonders effiziente Umgebungsausleuchtung im Hinblick auf zu berücksichtigende Blendungen von weiteren Verkehrsteilnehmern in der Umgebung des Fahrzeugs.

Besonders vorteilhaft erweist es sich, wenn abhängig von den Stellungen der Blenden die Leuchtweite des Fernlichts des Fahrzeugs kontinuierlich veränderbar ist. Jede einzelne Blende ist somit in ihrer Stellung derart veränderbar, dass dadurch die Leuchtweite des Fernlichts des Fahrzeugs regelbar ist. Gerade dadurch kann dem Erfordernis eines Vermeidens einer Blendung eines anderen Verkehrsteilnehmers durch das Fernlicht des Fahrzeugs Rechnung getragen werden.

Die Stellungen der Blenden sind derart veränderbar, dass Teilbereiche eines gesamten Leuchtbereichs des Fernlichts in der Leuchtweite individuell veränderbar sind. Die Veränderung der Teilbereiche des gesamten Leuchtbereichs erfolgt unabhängig von anderen Teilbereichen des gesamten Leuchtbereichs. Situationsabhängig kann dadurch ermöglicht werden, dass verschiedenste Bereiche eines gesamten Leuchtbereichs veränderbar sind, ohne das andere Teilbereiche dadurch betroffen sind und somit auch die anderen Teilbereiche in ihrer momentanen Leuchtweite nicht verändert werden. Die Teilbereiche werden bevorzugt situationsabhängig in Anzahl und/oder Formgebung ausgebildet. Abhängig von der Verkehrssituation werden diese Teilbereiche vorzugsweise kontinuierlich verändert und durch die Stellungen der Blenden beeinflusst.

Vorzugsweise ist zumindest eine Blende, bevorzugt jede Blende, unabhängig von der oder den anderen weiteren Blenden zumindest in einer Ebene bewegbar, welche die optische Achse unter einem Winkel schneidet. Bevorzugt ist die Ebene derart angeordnet, dass die optische Achse im Wesentlichen senkrecht auf dieser Ebene steht. Ist die optische Achse bevorzugt im Wesentlichen horizontal orientiert, so ist die Ebene dann im Wesentlichen bevorzugt vertikal orientiert. Vorzugsweise ist die Blende lediglich in einer einzigen Raumrichtung der Ebene verschiebbar. Eine im Wesentlichen geradlinige Bewegung der Blende lässt sich durch die Ausgestaltungen realisieren. Es kann somit erreicht werden, dass eine Blende zwischen der Lichtquelle und der Abbildungsoptik hin und her verschiebbar angeordnet ist und bevorzugt den Abstand zu der Lichtquelle und der Abbildungsoptik in Richtung der optischen Achse nicht verändert. Eine Blende kann somit separat und unabhängig von den anderen Blenden verschoben werden.

Vorzugsweise umfasst zumindest eine Blende, vorteilhaft jede Blende, ein Drehelement und einen Lamellenkörper. Insbesondere weist eine Blende lediglich einen einzigen Lamellenkörper auf. Der Lamellenkörper ist bevorzugter Weise plattenförmig ausgebildet. Es kann auch vorgesehen sein, dass die Blenden walzenförmig ausgebildet sind, welche bevorzugt unterschiedliche und nicht konstante Radien aufweisen.

In bevorzugter Weise ist zumindest eine Blende, bevorzugt jede Blende, um eine eigene Drehachse drehbar. Die Drehachse ist bevorzugter Weise die

Drehachse des Drehelements. Jede Blende ist somit unabhängig von der anderen Blende in vielfältiger Weise in ihrer Stellung und Position veränderlich. Neben einer vorteilhaft geradlinigen Bewegung durch die Verschiebungsmöglichkeit der Blende kann zusätzlich dazu oder anstatt dieser auch eine Kipp- oder Schwenkbewegung um die Drehachse erzeugt werden. Die Umgebungsausleuchtung des Fahrzeugs kann durch die Beleuchtungsvorrichtung in sehr präziser Weise eingestellt werden. Es kann auch vorgesehen sein, dass zumindest eine Blende, bevorzugt jede Blende, sowohl verschiebbar als auch drehbar angeordnet ist.

Die Drehachse einer Blende ist in vorteilhafter Weise beabstandet zu einem oberen und einem unteren Rand der Blende, insbesondere dem Lamellenkörper der Blende, angeordnet. Das Drehelement kann dabei so an dem Lamellenkörper angeordnet sein, dass sich der Lamellenkörper beidseitig des Drehelements erstreckt und somit auch beidseitig zur Drehachse ausgebildet ist. Die Beweglichkeit und Positionierung der Blenden kann dadurch verbessert werden und eine situationsabhängige Ausgestaltung der jeweiligen Blenden ermöglicht werden. Dadurch kann eine platzoptimierte Blendenanordnung und auch eine relativ kleine Beleuchtungsvorrichtung konzipiert werden.

In bevorzugter Weise ist die Drehachse einer Blende quer zur optischen Achse der Lichtquelle angeordnet. Insbesondere ist die Drehachse im Wesentlichen senkrecht zur optischen Achse angeordnet. Die Blenden sind somit in einer Betrachtungsrichtung von der Lichtquelle in Richtung der Abbildungsoptik horizontal nebeneinander angeordnet und die Drehachsen sind im Wesentlichen horizontal orientiert.

Vorzugsweise weist jede Blende einen eigenen separaten Antriebsmotor auf. Jede Blende ist somit ein eigenes Modul, welches vorteilhaft ein Drehelement, einen einzigen Lamellenkörper und einen Antriebsmotor umfasst. Dies gewährleistet eine optimale Einstellung jeder Blende im Hinblick auf eine optimale Umgebungsausleuchtung des Fahrzeugs.

Vorzugsweise sind die Blenden überlappungsfrei zueinander angeordnet. Dadurch kann die individuelle Positionsveränderung durch ein Verschieben und gegebenenfalls auch ein Drehen einer Blende sehr vielseitig erfolgen und eine Einschränkung der Positionierung einer Blende durch benachbarte Blenden ist nicht gegeben.

Die Leuchtweite des Fernlichts ist vorzugsweise abhängig von in der Umgebung des Fahrzeugs durch ein Erfassungssystem des Fahrzeugs detektierbaren Objekten regulierbar, in dem die Stellung der Blenden veränderbar ist. Das Erfassungssystem kann dabei optische Komponenten, wie eine Kamera, umfassen, mit welcher eine optische Detektion der Umgebung des Fahrzeugs möglich ist. Zusätzlich kann das Erfassungssystem auch Radarsensoren aufweisen, mit welchen eine exakte Abstands- und Winkeldetektion von Objekten im Umgebungsbereich des Fahrzeugs ermöglicht wird. Diese Radarsensoren können beispielsweise in einem vorderen Stoßfänger des Fahrzeugs und/oder an Außenspiegeln des Fahrzeugs angeordnet sein. Diese Anordnungen sind jedoch lediglich beispielhaft und können in vielfältiger Weise auch anderweitig ausgestaltet sein.

Es kann auch ein Erfassungssystem vorgesehen sein, welches als sogenanntes "Car-to-X"-Kommunkationssystem ausgebildet ist. Bei diesen System kann ein anderer Verkehrsteilnehmer X, beispielsweise ein anderes Fahrzeug oder aber auch ein Motorrad oder Fahrrad oder ein Fußgänger, eine Positionsinformation an das eigene Fahrzeug senden. Diese Information kann bevorzugt auf einem Display ausgegeben werden. In Verbindung mit der eigenen Fahrzeugposition kann dann die relative Position zueinander bestimmt werden.

Durch die durch das Erfassungssystem erhaltenen Informationen kann erkannt werden, ob und wo sich ein oder mehrere Objekte in der Umgebung des Fahrzeugs befinden. Abhängig von diesen Informationen kann dann eine Steuerung jeder einzelnen Blende der Beleuchtungsvorrichtung derart durchgeführt werden, dass eine Leuchtweitenregelung des Fernlichts derart erreicht werden kann, dass diese detektierten Objekte nicht geblendet werden. Beispielsweise kann dabei ein vorausfahrendes Fahrzeug und/oder ein entgegenkommendes Fahrzeug erkannt werden und die Leuchtweitenregelung durchgeführt werden. Dies erfolgt derart, dass durch individuelle Einstellung der Blenden diejenigen Teilbereiche des gesamten Leuchtbereichs in ihren Leuchtweiten derart veränderbar sind, dass sie die detektierten Objekte nicht blenden. Es kann somit erreicht werden, dass mehrere voneinander unabhängige Leuchtweitenregelungen von verschiedenen Teilbereichen des gesamten Leuchtbereichs des Fernlichts vor dem Fahrzeug gleichzeitig und automatisch einstellbar sind.

Die Beleuchtungsvorrichtung umfasst in vorteilhafter Weise einen Bi-Xenon-Scheinwerfer, wobei die Lichtquelle bevorzugt als Xenon-Lampe ausgebildet ist. Bevorzugt kann dann eine derartige Xenon-Lampe sowohl für die Abblendlichtfunktion als auch für die Fernlichtfunktion des Scheinwerfers herangezogen werden.

Prinzipiell kann die Ausgestaltung der Beleuchtungsvorrichtung auch zur Leuchtweitenregelung der Abblendlichtfunktion eines Scheinwerfers eines Fahrzeugs herangezogen werden. Die Anordnung der Blenden ist vorzugsweise derart, dass sie in ihrer Gesamtheit die Form und Funktion einer einzigen Blende eines herkömmlichen Bi-Xenon-Scheinwerfers erfüllen können.

Der Antriebsmotor einer Blende ist vorzugsweise als Schrittmotor ausgebildet, welcher Zwischenstufen annehmen kann und dadurch unterschiedliche Verstellpositionen der jeweiligen Blenden einstellen kann.

Ein Ausführungsbeispiel der Erfindung wird nachfolgend anhand schematischer Zeichnungen näher erläutert. Es zeigen:
- Fig. 1: eine Schnittdarstellung durch ein Ausführungsbeispiel einer lösungsgemäßen Beleuchtungsvorrichtung;
- Fig. 2: eine Vorderansicht einer Beleuchtungsvorrichtung gemäß Fig. 1; und
- Fig. 3: eine Draufsichtdarstellung auf eine schematische Verkehrssituation in der sich ein Fahrzeug mit einer Beleuchtungsvorrichtung gemäß Fig. 1 befindet.

In den Figuren werden gleiche oder funktionsgleiche Elemente mit den gleichen Bezugszeichen versehen.

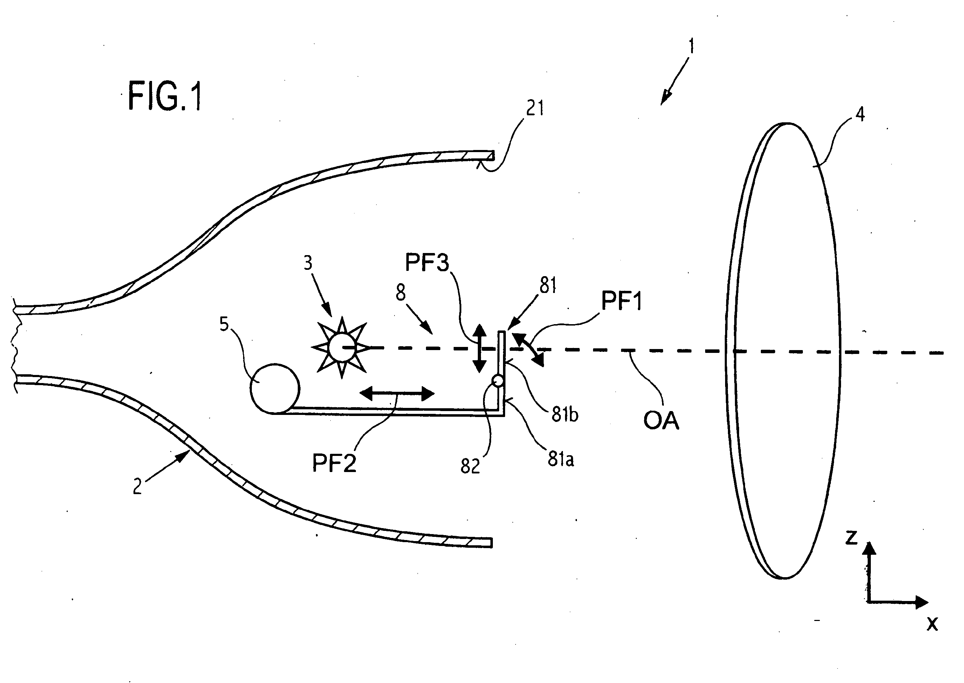

Fig. 1 zeigt in schematischer Querschnittdarstellung eine Beleuchtungsvorrichtung 1, welche als Bi-Xenon-Frontscheinwerfer in einem Fahrzeug ausgebildet ist. Die Beleuchtungsvorrichtung 1 ist zur Umgebungsausleuchtung eines Vorfeldes des Fahrzeugs ausgebildet. Sie umfasst ein Scheinwerferinnengehäuse 2, welches an der Innenseite 21 als Reflektor ausgebildet ist. In dem Scheinwerferinnengehäuse 2 ist eine Lichtquelle 3 angeordnet, welche im Ausführungsbeispiel als Xenon-Lampe ausgebildet ist. Des Weiteren umfasst die Beleuchtungsvorrichtung 1 eine Abbildungsoptik 4, welche im Ausführungsbeispiel als Schweinwerferglas ausgebildet ist. Die Lichtquelle 3 ist derart positioniert, dass ihre optische Achse OA in Richtung der Abbildungsoptik 4 orientiert ist und im Ausführungsbeispiel im Wesentlichen in horizontaler Richtung (x-Richtung) verläuft.

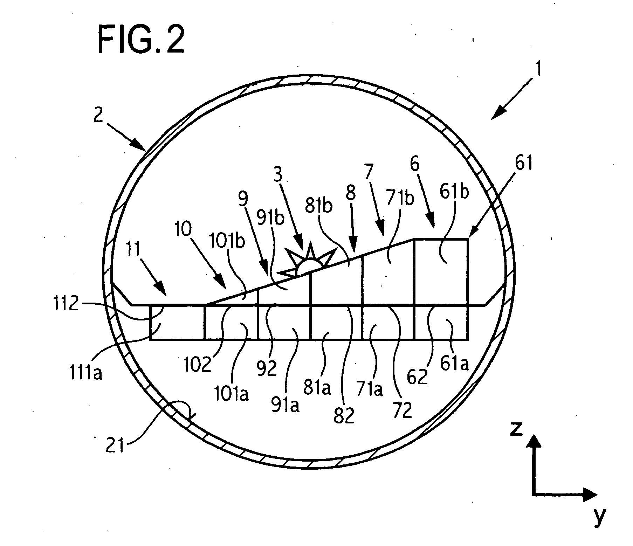

Zwischen der Lichtquelle 3 und der Abbildungsoptik 4 ist eine Blendenanordnung positioniert, welche eine Mehrzahl an Blenden aufweist. In der gezeigten Schnittdarstellung gemäß Fig. 1 ist eine Blende 8 zu erkennen. Die weitere Ausgestaltung und Anordnung der weiteren Blenden 6, 7, 9, 10 und 11 (Fig. 2) werden bei den Ausführungen zur Fig. 2 näher erläutert.

Die Mehrzahl an Blenden der Blendenanordnung sind überlappungsfrei zueinander positioniert und in der gezeigten Ausgangsstellung bzw. Basisanordnung auch in Richtung senkrecht zur Figurenebene aneinander angrenzend angeordnet (Fig. 2).

Die Blende 8 weist einen Lamellenkörper 81 und ein mit dem Lamellenkörper 81 fest verbundenes Drehelement 82 auf. Der Lamellenkörper 81 ist in der gezeigten Ausgangsposition im Wesentlichen vertikal in z-Richtung angeordnet und plattenförmig ausgebildet. Das Drehelement 82 ist derart an dem Lamellenkörper 81 angeordnet, dass es nicht unmittelbar an einem oberen oder unteren Rand des Lamellenkörpers 81 angrenzt sondern quasi zurückversetzt zu den Randbereichen des Lamellenkörpers 81 angeordnet ist. Der Lamellenkörper 81 erstreckt sich somit in z-Richtung sowohl oberhalb als auch unterhalb des Drehelements 82. Der Lamellenkörper 81 weist dadurch einen sich nach unten erstreckenden Teilbereich 81 a und einen sich gegenüber dem Drehelement 82 nach oben erstreckenden Teilbereich 81 b auf. Das Drehelement 82 ist in der gezeigten Darstellung im Wesentlichen senkrecht zur Figurenebene orientiert und die Blende 8 ist um eine senkrecht zur Figurenebene verlaufende Drehachse gemäß der Pfeildarstellung PF1 drehbar gelagert. Die Drehachse ist dabei durch die Achse des Drehelements 82 gegeben. Diese Drehbewegung der Blende 8 ist durch einen Stellmotor bzw. einen Antriebsmotor 5 bewirkbar. Dieser ist mit dem Lammellenkörper 81 mechanisch gekoppelt und bewirkt in Pfeilrichtung PF2 eine Bewegungsübertragung an die Blende 8 und insbesondere an den Lamellenkörper 81 derart, dass ein Drehen um die Drehachse bzw. das Drehelement 82 erfolgt.

Darüber hinaus ist die Blende 8 im Ausführungsbeispiel in einer Ebene, welche im Wesentlichen senkrecht zur optischen Achse OA orientiert ist verschiebbar. Insbesondere ist hierbei die Verschiebbarkeit der Blende 8 ausschließlich in vertikaler Richtung (z-Richtung) vorgesehen. Dies ist durch die Pfeildarstellung PF3 angedeutet. Diese Verschiebbarkeit in vertikaler Richtung kann durch den ausschließlich der Blende 8 zugeordneten Antriebsmotor 5 oder einen nicht dargestellten weiteren separaten Antriebsmotor erfolgen, welcher bevorzugt ebenfalls nur für die Verschiebung dieser einen Blende 8 ausgebildet ist.

Die in Fig. 1 gezeigten Komponenten der Beleuchtungsvorrichtung 1 sind in einem nicht dargestellten Gesamtgehäuse angeordnet.

In Fig. 2 ist eine Vorderansicht der in Fig. 1 dargestellten Beleuchtungsvorrichtung 1 gezeigt. Die Blendenanordnung umfasst die Blenden 6, 7, 8, 9, 10 und 11, welche in horizontaler Richtung (y-Richtung) unmittelbar angrenzend aneinander positioniert sind und ohne Überlappung angeordnet sind. In dieser gezeigten Ausgangsstellung bzw. Grundstellung sind die Blenden 6 bis 11 und insbesondere die Lamellenkörper der Blenden 6 bis 11 somit alle in einer x-y-Ebene angeordnet, welche sich senkrecht zur optischen Achse OA erstreckt. Wie aus der Darstellung in Fig. 2 zu erkennen ist, weist die Blende 6 einen Lamellenkörper 61 und ein Drehelement 62 auf. Das Drehelement 62 ist beabstandet zu dem oberen und dem unteren Rand des Lamellenkörpers 6 angeordnet, so dass der Lamellenkörper 61 durch die Anordnung des Drehelements 62 in einen unteren Teilbereich 61 a und einen oberen Teilbereich 61 b praktisch geteilt wird. Das Drehelement 62 ist horizontal angeordnet, wodurch auch die Drehachse der Blende 6 in horizontaler Richtung orientiert ist.

In analoger Weise ist die Blende 7 mit dem Drehelement 72 und den Teilbereichen 71a und 71b eines Lamellenkörpers ausgebildet. Darüber hinaus sind auch die Blenden 9 und 10 entsprechend ausgebildet. Die Blende 9 weist dabei ein Drehelement 92 und einen unteren Teilbereich 91 a sowie einen oberen Teilbereich 91b eines Lamellenkörpers auf. Die Blende 10 weist ebenfalls ein Drehelement 102 und einen unteren Teilbereich 101 a sowie einen oberen Teilbereich 101 b eines Lamellenkörpers auf. Die Blende 11 umfasst ein Drehelement 112 und ein sich vom Drehelement 112 ausgehend lediglich nach unten (z-Richtung) erstreckendes Teil 111a eines Lamellenkörpers auf.

In der gezeigten Darstellung gemäß Fig. 2 sind die Blenden 6 bis 11 in horizontaler Richtung (y-Richtung) derart angeordnet, dass ihre Drehelemente 62, 72, 82, 92, 102 und 112 und somit auch die jeweiligen separaten Drehachsen der Blenden 6 bis 11 praktisch in einer Linie horizontal angeordnet sind. Wie aus der Darstellung in Fig. 1 auch zu erkennen ist, sind in dieser gezeigten Ausgangsstellung der Blenden 6 bis 11 alle in einer gleichen Position in x-Richtung. In x-Richtung weisen somit alle Blenden 6 bis 11 einen im Wesentlichen gleichen Abstand zur Lichtquelle 3 und zur Abbildungsoptik 4 auf.

Wie in der Ausgestaltung der Blendenanordnung gemäß Fig. 2 zu erkennen ist, sind die oberen Teilbereiche 71 b, 81 b, 91 b und 101 b in ihrer Höhe (z-Richtung) abgeschrägt ausgebildet, derart, dass sie ausgehend von dem höchsten Teilbereich 61 b des Lamellenkörpers 61 der Blende 6 kontinuierlich bis auf die Höhe des Drehelements 112 der Blende 11 abfallen.

Ausgehend von der in Fig. 2 gezeigten Ausgangsstellung der Blenden 6 bis 11 können diese abhängig von der Verkehrssituation jeweils separat gedreht und verschoben werden, um ein Blenden anderer Verkehrsteilnehmer vermeiden zu können. Es kann auch vorgesehen sein, dass die Blenden 6 bis 11 lediglich verschiebbar, insbesondere vertikal zur optischen Achse OA, aber nicht drehbar angeordnet sind.

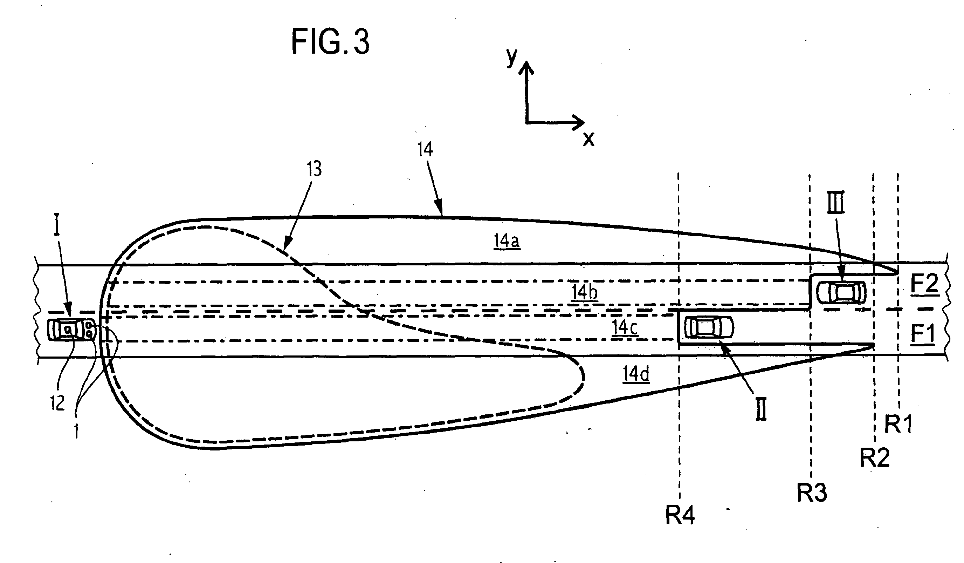

In Fig. 3 ist eine schematische Draufsichtdarstellung auf eine Verkehrssituation gezeigt, bei der sich ein Fahrzeug I auf einer Fahrbahn F1 in x-Richtung bewegt. Das Fahrzeug I umfasst ein Erfassungssystem 12, welches zum Erfassen von Umgebungsbedingungen des Fahrzeugs I ausgebildet ist. Das Erfassungssystem 12 umfasst eine Kamera, welche im Inneren im Bereich einer Frontscheibe des Fahrzeugs I angeordnet ist und zur optischen Detektion von Objekten im Vorfeld des Fahrzeugs I ausgebildet ist. Zusätzlich umfasst das Fahrzeug I auch nicht dargestellte Radarsensoren, welche zur Abstandsmessung von vor dem Fahrzeug befindlichen Objekten ausgebildet sind. Das Fahrzeug I umfasst zwei Beleuchtungsvorrichtungen 1, welche als Bi-Xenon-Scheinwerfer in üblicher Weise an der Vorderseite des Fahrzeugs I angeordnet sind.

Durch die Beleuchtungsvorrichtungen 1 kann ein Leuchtbereich 13 (gestrichelte Linie) einer Abblendlichtfunktion der Bi-Xenon-Scheinwerfer erreicht werden. Wie dabei zu erkennen ist, erstreckt sich dieser Leuchtbereich 13 der Abblendlichtfunktion auch seitlich der Fahrbahn F1 und einer Gegenfahrbahn F2. Wie zu erkennen ist, ist dieser gesamte Leuchtbereich 13 der Abblendlichtfunktion keulenförmig ausgebildet und erstreckt sich im Bereich der Fahrbahn F1 des Fahrzeugs I weiter in x-Richtung als auf der Gegenfahrbahn F2.

In der gezeigten Ausführung gemäß Fig. 3 werden die Beleuchtungsvorrichtungen 1 mit der Fernlichtfunktion betrieben, welche einen nicht dargestellten Basis-Leuchtbereich ermöglicht. In dem gesamten Basis-Leuchtbereich der Fernlichtfunktion würde ein vor dem Fahrzeug I in gleicher Richtung fahrendes Fahrzeug II und ein auf der Gegenfahrbahn F2 entgegenkommendes Fahrzeug III geblendet werden.

Die Fahrzeuge II und III werden durch das Erfassungssystem 12 des Fahrzeugs I detektiert. Dabei kann die Position sowie die Bewegungsgeschwindigkeit und die Bewegungsrichtung der Fahrzeuge II und III detektiert werden. Zur genaueren Ortsbestimmung kann das Fahrzeug I auch ein GPS-System umfassen, dessen Informationen neben den Informationen des Erfassungssystems 12 zur Leuchtweitenregulierung des gesamten Basis-Leuchtbereichs der Beleuchtungsvorrichtungen 1 herangezogen werden. Die Beleuchtungsvorrichtungen 1 sind derart ausgebildet, dass der Basis-Leuchtbereich situationsabhängig in einen momentanen gesamten Leuchtbereich 14 verändert werden kann. Dabei werden abhängig von den detektierten Objekten vor dem Fahrzeug I die Leuchtweiten an entsprechenden, beispielhaft dargestellte Teilbereiche 14a bis 14d des Basis-Leuchtbereichs verändert, so dass der momentane gesamte Leuchtbereich 14 erzeugt wird.

In der gezeigten Darstellung werden die Teilbereiche 14a, 14b, 14c und 14d des momentanen gesamten Leuchtbereichs 14 der Fernlichtfunktion unabhängig von anderen Teilbereichen 14a bis 14d derart in ihrer Leuchtweite kontinuierlich reguliert, dass die Fahrzeuge II und III durch das Fernlicht der Beleuchtungsvorrichtungen 1 nicht geblendet werden. Die Teilbereiche 14a bis 14d sind lediglich beispielhaft und können abhängig von den detektierten Objekten vor dem Fahrzeug I in Anzahl und Form variieren.

Mittels einer nicht dargestellten Steuerungs- und Regelungsvorrichtung werden Informationen des Erfassungssystems 12 und des GPS-Systems ausgewertet und abhängig davon die in Fig. 2 nicht dargestellten jeweiligen separaten Antriebsmotoren (lediglich der Antriebsmotor 5 der Blende 8 ist gezeigt) der jeweiligen Blenden 6 bis 11 derart angesteuert, dass sie die Blenden 6 bis 11 in individueller und separater Weise in ihrer Stellung und Position verändern. Durch diese Einstellung der Blenden 6 bis 11 kann dann erreicht werden, dass in der gezeigten Darstellung gemäß Fig. 3 vier voneinander unabhängige Leuchtweitenregelungen, charakterisiert durch die Teilbereichen 14a bis 14d, des gesamten Leuchtbereichs 14 durchgeführt werden. Es ist dabei zu erkennen, dass die Leuchtweite des gesamten Leuchtbereichs 14 im an die Gegenfahrbahn F2 angrenzenden Rand bis zu einer maximalen Reichweite R1 reicht und die Blenden 6 bis 11 derart eingestellt werden, dass der Leuchtbereich 14 in diesem Teilbereich 14a eine unveränderte maximale Reichweite aufweist. Unabhängig davon wird der gesamte Leuchtbereich 14 im Teilbereich 14d des an die Fahrbahn F1 angrenzenden Randes bis auf eine Reichweite R2 der Leuchtweite reguliert. In entsprechender Weise wird eine Leuchtweitenregulierung bis auf eine Reichweite R3 der Leuchtweite des gesamten Leuchtbereichs 14 im Teilbereich 14b unmittelbar vor dem Fahrzeug III reguliert. Dadurch wird ein Fahrzeugführer des Fahrzeugs III durch die Beleuchtungsvorrichtungen 1 des Fahrzeugs I nicht geblendet. Bei weiterem Annähern der Fahrzeuge I und III wird die Einstellung der Blenden 6 bis 11 kontinuierlich derart verändert, dass die Reichweite R3 der Leuchtweite des gesamten Lichtbereichs 14 in diesem sich dann verändernden Teilbereich 14b stetig reduziert wird, so dass fortwährend ein Blenden des Fahrzeuginsassen des Fahrzeugs III verhindert werden kann.

In entsprechender Weise wird durch die individuelle Veränderung der Stellung der Blenden 6 bis 11 auch ein Blenden des Fahrzeugführers des Fahrzeugs II verhindert. Auch dort wird unabhängig von den anderen Teilbereichen 14a, 14b, 14d und somit von den Reichweiten R1 bis R3 der Leuchtweiten eine unabhängige Regulierung der Reichweite R4 der Leuchtweite in diesem Teilbereich 14c des gesamten Leuchtbereichs 14 eingestellt. Auch diese Reichweite R4 wird abhängig von der sich gegebenenfalls ändernden Distanz zwischen dem Fahrzeug I und dem Fahrzeug II verändert.

Durch die vorgeschlagene Beleuchtungsvorrichtung 1 kann somit in kontinuierlicher und situationsabhängiger Weise ein Einstellen der Blenden 6 bis 11 durchgeführt werden und somit verkehrssituationsabhängig und kontinuierlich veränderbar eine Leuchtweitenregulierung durchgeführt werden. Diese Leuchtweitenregulierung ermöglicht insbesondere eine separate Regulierung der Leuchtweite von Teilbereichen 14a bis 14d des gesamten Leuchtbereichs 14 und dies auch unabhängig von anderen Teilbereichen 14a bis 14d des gesamten Leuchtbereichs 14. Die zu Grunde zu legenden Teilbereiche 14a bis 14d des gesamten Leuchtbereichs 14 können dabei in Anzahl und Orientierung in beliebiger Weise ausgestaltet sein und in Formgebung und Größe variieren. Die Teilbereiche 14a bis 14d können sich dabei in Längsrichtung (x-Richtung) erstrecken und können auch überlappend angeordnet sein und somit den gesamten Leuchtbereich 14 ausbilden. Die Teilbereiche 14a bis 14d können jedoch auch derart angenommen werden, dass sie scharfe Grenzen aufweisen, und unmittelbar aneinander angrenzen um in Summe den gesamten Leuchtbereich 14 darzustellen. Es sei angemerkt, dass die Teilbereiche 14a bis 14d nicht explizit ausgebildet werden, sondern lediglich als Hilfskonstruktion zur Darstellung und Erläuterung des vorgeschlagenen Funktionsprinzips der Beleuchtungsvorrichtung 1 dienen.

## Patentansprüche

1. Beleuchtungsvorrichtung zur Umgebungsausleuchtung eines Fahrzeugs (I) mit zumindest einer Lichtquelle (3) deren optische Achse (OA) in Richtung einer Abbildungsoptik (4) orientiert ist, wobei zwischen der Lichtquelle (3) und der Abbildungsoptik (4) eine Blendenanordnung mit zumindest zwei Blenden (6 bis 11) angeordnet ist und jede Blende (6 bis 11) separat bewegbar ist, wobei zumindest eine Blende (6 bis 11) zumindest zwischen der Lichtquelle (3) und der Abbildungsoptik (4) positionsveränderlich verschiebbar ist,
**dadurch gekennzeichnet, dass**
abhängig von den Stellungen der Blenden (6 bis 11) die Leuchtweite des Fernlichts des Fahrzeugs (I) kontinuierlich veränderbar ist, wobei die Stellungen der Blenden (6 bis 11) derart veränderbar sind, dass Teilbereiche (14a bis 14d) eines momentanen gesamten Leuchtbereichs (14) des Fernlichts in der Leuchtweite unabhängig von anderen Teilbereichen (14a bis 14d) des momentanen gesamten Leuchtbereichs (14) veränderbar sind.

2. Beleuchtungsvorrichtung nach Anspruch 1,
**dadurch gekennzeichnet, dass**
zumindest eine Blende (6 bis 11) unabhängig von der anderen Blende (6 bis 11) zumindest in einer Ebene, welche die optische Achse (OA) unter einem Winkel schneidet, verschiebbar ist.

3. Beleuchtungsvorrichtung nach Anspruch 2,
**dadurch gekennzeichnet, dass**
zumindest eine Blende (6 bis 11) unabhängig von der anderen Blende (6 bis 11) in einer Raumrichtung senkrecht zur optische Achse (OA) verschiebbar ist.

4. Beleuchtungsvorrichtung nach einem der vorhergehenden Ansprüche,
**dadurch gekennzeichnet, dass**
zumindest eine Blende (6 bis 11) ein Drehelement (62, 72, 82, 92, 102) und zumindest einen Lamellenkörper (61, 71, 81, 91, 101) aufweist.

5. Beleuchtungsvorrichtung nach Anspruch 4,
**dadurch gekennzeichnet, dass**
die Blende (6 bis 11) eine eigene Drehachse aufweist, um welche die zugehörige Blende (6 bis 11) drehbar ist.

6. Beleuchtungsvorrichtung nach Anspruch 5,
**dadurch gekennzeichnet, dass**
die Drehachse einer Blende (6 bis 11) beabstandet zu einem oberen und einem unteren Rand der Blende (6 bis 11), insbesondere dem Lamellenkörper (61, 71, 81, 91,101) der Blende (6 bis 11), angeordnet ist.

7. Beleuchtungsvorrichtung nach einem der vorhergehenden Ansprüche,
**dadurch gekennzeichnet, dass**
jede Blende (6 bis 11) einen Antriebsmotor (5) aufweist.

8. Beleuchtungsvorrichtung nach einem der vorhergehenden Ansprüche,
**dadurch gekennzeichnet, dass**
die Blenden (6 bis 11) überlappungsfrei angeordnet sind .

9. Beleuchtungsvorrichtung nach einem der vorhergehenden Ansprüche,
**dadurch gekennzeichnet, dass**
die Leuchtweite des Fernlichts abhängig von in der Umgebung des Fahrzeugs (I), insbesondere in der Umgebung vor dem Fahrzeug, durch ein Erfassungssystem (12) des Fahrzeugs (I) detektierbaren Objekten (II, III) einstellbar ist, indem die Stellung der Blenden (6 bis 11) veränderbar ist.

10. Beleuchtungsvorrichtung nach einem der vorhergehenden Ansprüche, welcher als Bi-Xenon-Scheinwerfer ausgebildet ist und die Lichtquelle (3) eine Xenon-Lampe ist.

## Claims

1. An illuminating device for lighting the area surrounding a vehicle (I), having at least one light source (3), of which the optical axis (OA) is oriented in direction of a projection lens (4), a diaphragm assembly comprising at least two diaphragms (6 to 11) being located between the light source (3) and the projection lens (4) and each diaphragm (6 to 11) being separately movable with at least one diaphragm (6 to 11) being displaceable so as to adopt different positions at least between the light source (3) and the projection lens (4),
**characterized in that**,
depending on the positions of the diaphragms (6 to 11), the range of illumination of the main beam of the vehicle (I) is continuously changeable, the positions of the diaphragms (6 to 11) being changeable in such a way that parts (14a to 14d) of an instantaneously full area of illumination (14) of the main beam are changeable in their range of illumination irrespective of other parts (14a to 14d) of the instantaneously full area of illumination (14).

2. An illuminating device according to Claim 1,
**characterized in that**,
irrespective of the other diaphragm (6 to 11), at least one diaphragm (6 to 11) is displaceable at least in one plane which intersects the optical axis (OA) at an angle.

3. An illuminating device according to Claim 2,
**characterized in that**,
irrespective of the other diaphragm (6 to 11), at least one diaphragm (6 to 11) is displaceable in a spatial direction perpendicular to the optical axis (OA).

4. An illuminating device according to one of the preceding claims,
**characterized in that**
at least one diaphragm (6 to 11) has a rotary element (62, 72, 82, 92, 102) and at least one lamellar member (61, 71, 81, 91, 101).

5. An illuminating device according to Claim 4,
**characterized in that**
the diaphragm (6 to 11) has its own axis of rotation, about which the respective diaphragm (6 to 11) is rotatable.

6. An illuminating device according to Claim 5,
**characterized in that**
the axis of rotation of a diaphragm (6 to 11) is located at a distance from an upper and a lower edge of the diaphragm (6 to 11) and in particular from the lamellar member (61, 71, 81, 91, 101) of the diaphragm (6 to 11).

7. An illuminating device according to one of the preceding claims,
**characterized in that**
each diaphragm (6 to 11) has a driving motor (5).

8. An illuminating device according to one of the preceding claims,
**characterized in that**
the diaphragms (6 to 11) are disposed in such a way as to be free of any overlap.

9. An illuminating device according to one of the preceding claims,
**characterized in that**
the range of illumination of the main beam is adjustable dependent on objects (II, III) detectable, by a detection system (12) of the vehicle (I), in the area surrounding the vehicle (I), especially in the surrounding area in front of the vehicle, owing to the fact that the positions of the diaphragms (6 to 11) are changeable.

10. An illuminating device according to one of the preceding claims which is in the form of a Bi-xenon headlamp and the light source (3) is a Xenon lamp.

## Revendications

1. Dispositif d'éclairage destiné à éclairer l'environnement d'un véhicule (I) avec au moins une source lumineuse (3), dont l'axe optique (OA) est orienté vers une optique de reproduction (4), entre la source lumineuse (3) et l'optique de reproduction (4) étant disposé un ensemble de diaphragmes avec au moins deux diaphragmes (6 à 11) et chaque diaphragme (6 à 11) pouvant être déplacé séparément, au moins un diaphragme (6 à 11) pouvant être déplacé de manière à modifier la position au moins entre la source lumineuse (3) et l'optique de reproduction (4), **caractérisé en ce qu'**en fonction des positions des diaphragmes (6 à 11), la portée lumineuse du feu de route du véhicule (I) peut être modifiée en continu, les positions des diaphragmes (6 à 11) pouvant être modifiées de telle sorte que des zones partielles (14a à 14d) d'une zone lumineuse (14) entière, momentanée du feu de route dans la portée lumineuse puissent être modifiées indépendamment des autres zones partielles (14a à 14d) de la zone lumineuse (14) entière, momentanée.

2. Dispositif d'éclairage selon la revendication 1, **caractérisé en ce qu'**au moins un diaphragme (6 à 11) peut être déplacé indépendamment de l'autre diaphragme (6 à 11) au moins dans un plan qui coupe l'axe optique (OA) selon un angle.

3. Dispositif d'éclairage selon la revendication 2, **caractérisé en ce qu'**au moins un diaphragme (6 à 11) peut être déplacé indépendamment de l'autre diaphragme (6 à 11) dans une direction dans l'espace perpendiculaire à l'axe optique (OA).

4. Dispositif d'éclairage selon l'une quelconque des revendications précédentes, **caractérisé en ce qu'**au moins un diaphragme (6 à 11) présente un élément rotatif (62, 72, 82, 92, 102) et au moins un corps à lamelles (61, 71, 81, 91, 101).

5. Dispositif d'éclairage selon la revendication 4, **caractérisé en ce que** le diaphragme (6 à 11) présente son propre axe de rotation, autour duquel le diaphragme (6 à 11) afférent peut être pivoté.

6. Dispositif d'éclairage selon la revendication 5, **caractérisé en ce que** l'axe de rotation d'un diaphragme (6 à 11) est disposé à distance d'un bord supérieur et d'un bord inférieur du diaphragme (6 à 11), en particulier du corps à lamelles (61, 71, 81, 91, 101) du diaphragme (6 à 11).

7. Dispositif d'éclairage selon l'une quelconque des revendications précédentes, **caractérisé en ce que** chaque diaphragme (6 à 11) présente un moteur d'entraînement (5).

8. Dispositif d'éclairage selon l'une quelconque des revendications précédentes, **caractérisé en ce que** les diaphragmes (6 à 11) sont disposés sans se chevaucher.

9. Dispositif d'éclairage selon l'une quelconque des revendications précédentes, **caractérisé en ce que** la portée du feu de route peut être réglée en fonction des objets (II, III) pouvant être détectés dans l'environnement du véhicule (I), en particulier dans l'environnement devant le véhicule par un système de détection (12) du véhicule (I) par le fait que la position des diaphragmes (6 à 11) peut être modifiée.

10. Dispositif d'éclairage selon l'une quelconque des revendications précédentes, lequel est réalisé comme un phare bi-xénon et la source lumineuse (3) est une lampe au xénon.
